## Europäisches Patentamt

## European Patent Office

## Office européen des brevets

(11) Publication number: **0 115 566**
**B1**

(12) **EUROPEAN PATENT SPECIFICATION**

(45) Date of publication of patent specification: **28.11.90**

(21) Application number: **83109326.5**

(22) Date of filing: **20.09.83**

(51) Int. Cl.⁵: **G 06 F 11/26**

(54) **Method for testing the operation of an I/O controller in a data processing system.**

(30) Priority: **09.12.82 US 448099**

(43) Date of publication of application:
**15.08.84 Bulletin 84/33**

(45) Publication of the grant of the patent:
**28.11.90 Bulletin 90/48**

(84) Designated Contracting States:
**DE FR GB**

(56) References cited:
**FR-A-2 170 659**
**FR-A-2 290 708**
**US-A-3 798 614**
**US-A-3 940 744**
**US-A-4 122 519**

**PROCEEDINGS OF THE FALL JOINT COMPUTER
CONFERENCE, 9th - 11th December 1968, San
Francisco, California, US, vol. 33, page 45,
A.F.I.P.S. Conference Proceedings, Thompson,
Washington, US; G.W. NELSON: "OPTS-600--
on-line peripheral test system"**

(73) Proprietor: **International Business Machines
Corporation
Old Orchard Road
Armonk, N.Y. 10504 (US)**

(72) Inventor: **Crandall, Donald Richard
380 NW 36th Court
Boca Raton Florida 33431 (US)**

(74) Representative: **Bonneau, Gérard
Compagnie IBM France Département de
Propriété Intellectuelle
F-06610 La Gaude (FR)**

Courier Press, Leamington Spa, England.

**Description**

The invention pertains to a method for testing the operation of an I/O controller used to interface an I/O device, such as a disc memory or a display terminal, to a host processor of a data processing system.

An example of a suitable host processor is the IBM (International Business Machines Corporation) Series/1 processor, and an example of a suitable I/O controller is an IBM Type 4966 I/O controller, which is particularly adapted for use with the Series/1 processor. An example of a system where the invention can be used is described in more detail in US Patent 4,426,637.

It is often required to test the functioning of the I/O controller and the I/O device, either to verify their operation during the manufacture of the system or to diagnose problems in the field. To carry out such testing, it is desired to be able to examine the contents of the storage, and to display designated segments of data, particularly, data communicated from the I/O device. In the prior art, it has been the practice to connect to the I/O controller a separate test device which is called an "I/O attachment console". An example of such an arrangement is described in US Patent 4,268,902.

Although test installations such as that described in the above Patent were capable of testing the desired functions of the I/O controller, nevertheless, they were disadvantageous for several reasons. First, it was time consuming to set up the test installation in that the covers of various system units had to be removed and cables disconnected and reconnected through the test device. The operations of the entire data processing system had to be shut down while this was taking place. Moreover, the presence of the test device itself could contribute to the problem being diagnosed, for instance, if the problem were due to electromagnetic interference. This made it very difficult to pinpoint the source of a problem in many instances.

IBM Technical Disclosure Bulletin, Vol. 19, No. 10, March 1977, authored by D. C. Solly, describes debugging user programs for use with a "console-less" controller. Although such programs could allow for some testing of the I/O controller without the need for an I/O attachment console, they are not fully acceptable in many situations due to the fact that the user's software program had to be modified greatly to accommodate the debugging programs.

Overcoming these disadvantages, the present invention provides a method for testing predetermined functions of an I/O controller in which it is not necessary to greatly disturb the ordinary processing operations of the data processing system of which the I/O controller to be tested forms a part. Particularly, the invention provides such a method in which it is not necessary to disconnect any of the cables of the data processing system and to connect in an I/O attachment console.

Further, the present invention provides such a method for testing an I/O controller in which it is not necessary to modify any of the user's software, and wherein the data processing system can continue its ordinary data processing operations after the testing of the I/O controller has been carried out.

Though it does not relate to a system enabling the test of an I/O controller, US Patent 4 122 519 can be cited as a background art relating to a programmable controller wherein a program loader carries out the storing of the program instructions into the memory of the controller on a "cycle steal" basis, therefore without appreciably affecting the operation of the controller.

In the method of the invention, for testing an I/O controller which interfaces a host processor and an I/O device, a test program is first loaded through the host processor into the RAM of the I/O controller, on a "cycle steal" basis so that the operations of the host processor are not greatly disturbed. Then, the method consists in reserving the use of a predetermined portion of a main storage associated with the host processor, inputting through a console of the host processor into the predetermined portion of the main storage information comprising data and/or instructions for use by the testing program, and transferring the information from the predetermined portion of the main storage unit of the host processor to the random access memory of the I/O controller on a cycle steal basis as controlled by the testing program.

During the actual testing of the I/O controller, the user can input instructions and data into the predetermined segment of the main storage through the operator's console which ordinarily forms a part of the host processor unit. These instructions and data are communicated to the I/O controller on a cycle steal basis using the program which was transferred into the I/O controller at the beginning of the test procedure. These instructions provide the capability of either transferring data into designated locations in the RAM of the I/O controller, for example, to correct programming problems, or transferring data which is stored in the RAM of the I/O controller back to the host processor for display upon the console of the host processor so that the contents of the RAM can be examined. Data from the ROS of the I/O controller can be transferred and displayed in a similar manner.

For a better understanding of the present invention, together with other and further advantages and features thereof, reference is made to the following description taken in connection with the accompanying drawings where:

Fig. 1 is a block diagram of a data processing system with which the invention can be used to advantage;

Fig. 2 is a front view of a console unit of a host processor shown in Fig. 1;

Figs 3—6 are a series of flow charts used to describe a test program which is resident in the RAM of the I/O controller during a test procedure;

Fig. 7 is a diagram showing the organization of a segment of the main storage of the host processor during testing; and

Figs. 8A—8E show formats of control words used during testing.

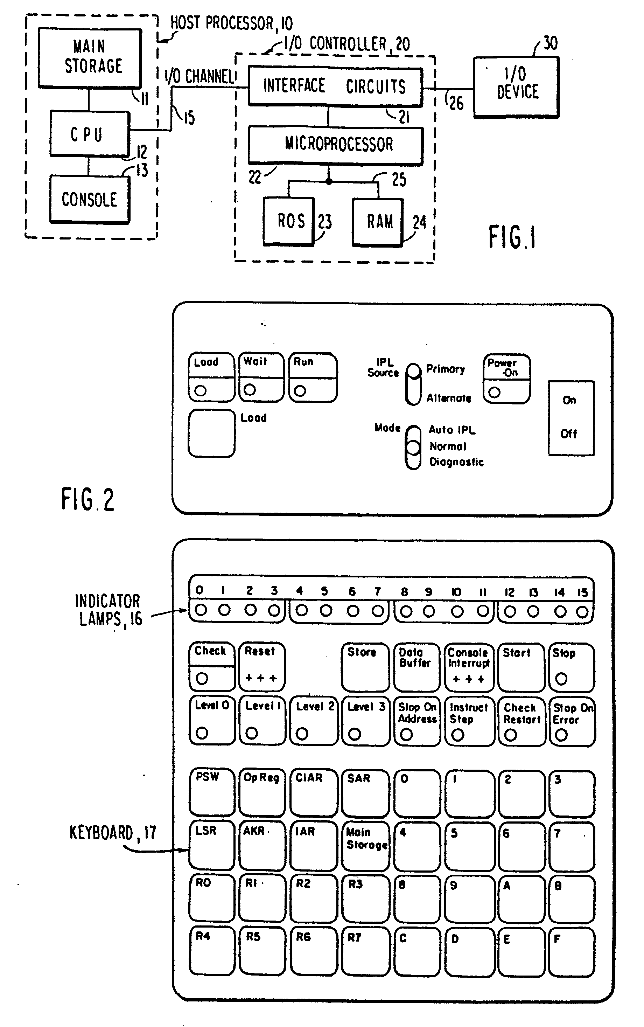

Fig. 1 is a block diagram showing a data processing installation where the present invention can be used to advantage. The system includes a host processor 10 composed of a main storage unit 11, a central processing unit (CPU) 12 and a console 13. The I/O controller 20 is provided to interface the host processor 10 with an I/O device 30. The I/O controller 20 includes interface circuits 21 which connect the I/O controller channel 15 from the host processor 10 to the I/O device 30, a microprocessor 22 which controls the operations of the interface circuits 21, and two memories which the microprocessor 22 requires for performing its control operations. The two memories are a read-only storage (ROS) 23 and a random access memory (RAM) 24, both of which are communicated with the microprocessor 22 via a bus 25.

Fig. 2 shows a front view of the console panel 13 of the host processor 10 for the example of the Series/1 processor mentioned above. The console 13 includes sixteen indicator lamps 16 grouped into sets of four for displaying simultaneously two bytes of data of eight bits each. Also included is a keyboard 17 composed of sixteen data entry push buttons, one push button for each "digit" in hexadecimal notation. The console further includes operational control switches and buttons including START, STOP, RESET, etc. and switches used for controlling the loading of programs. For a detailed discussion of the usage and operations of each of the switches and buttons on this console panel, reference may be made to the Series/1 User's Manual (IBM order No. GA34-0021-3) and to US Patent No. 4,038,642.

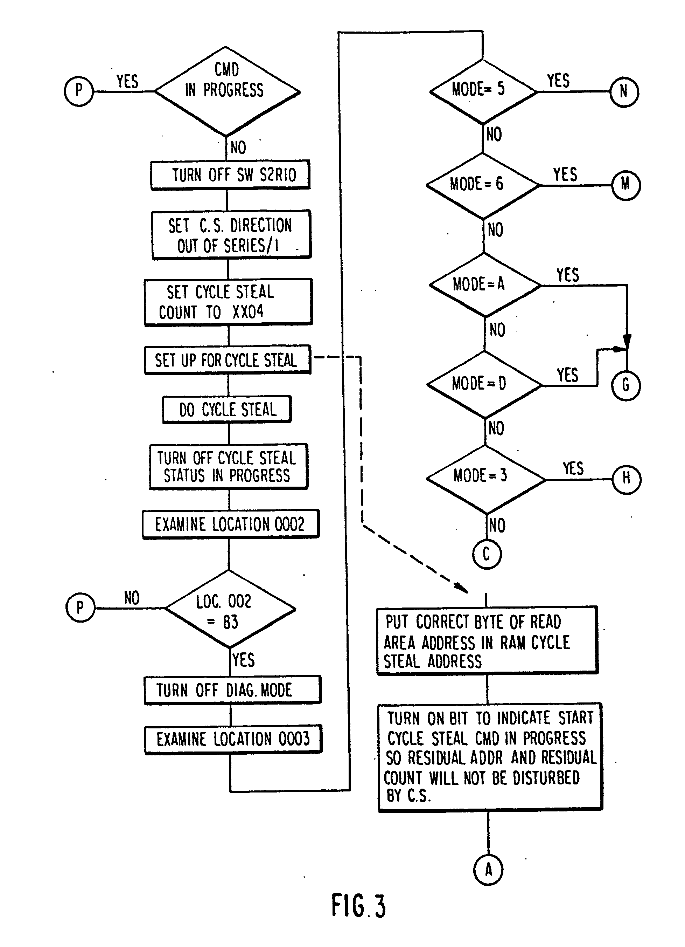

To commence testing of an I/O controller using the method of the invention, it is first necessary to load into the RAM 24 of the I/O controller 20 a test program. This can easily be accomplished by using the "IPL Load" capability of the Series/1 processor. The program which is to be loaded into the RAM 24 is illustrated in Figs. 3—6 and will be discussed in detail below. After loading the test program into the RAM 24, it is necessary to clear a predetermined number of bytes of the main storage 11 of the host processor 10 for use in transferring instructions and data to the RAM 24 and for receiving data from the RAM 24 and the ROS 23 for display upon the indicator lamps 16 for diagnosis by the testing user. In the example herein described, it is assumed that data from locations 0004 through 0019 of the main storage 11 is transferred into RAM 24 where it is saved for return to the main storage 11 at the completion of the test procedure. The data from locations 0000 through 0003 must be saved manually for reasons discussed below.

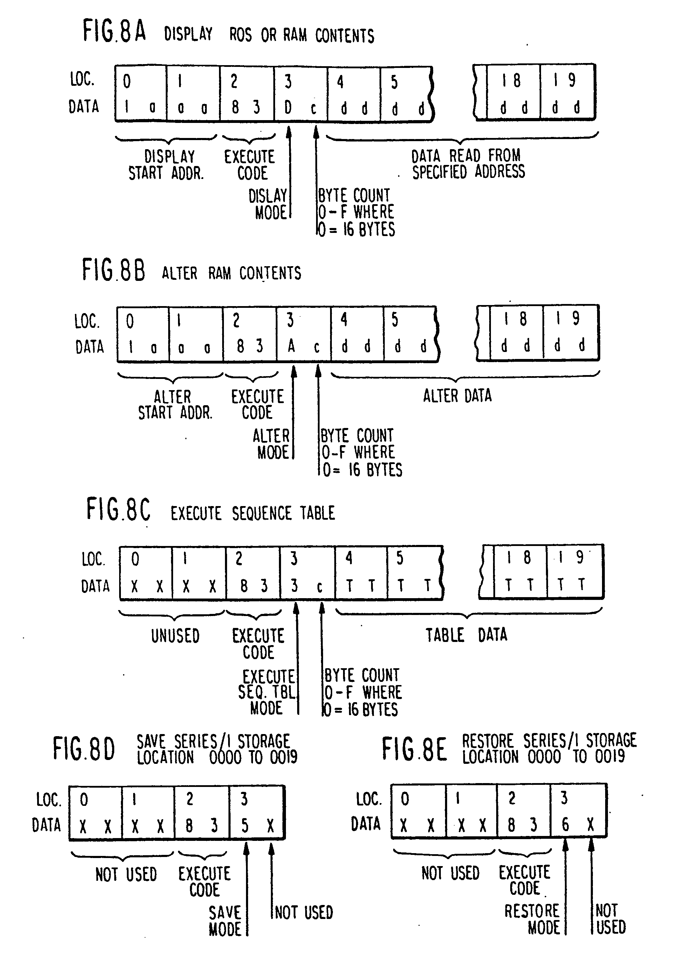

After the test program has been loaded into the RAM 24 and the first 20 bytes of the main storage 11 saved, the actual testing of the I/O controller 20 can commence. This testing is carried out, as mentioned above, using the cleared first 20 locations of the main storage 11. As illustrated in Fig. 8, the first two word locations (0000 and 0001) in the main storage are used to indicate an address in either the ROS 23 or the RAM 24, the second and third locations (0002 and 0003) are used to hold an execute code, and the remaining 16 locations are used for storing data, for example, to be transferred into the RAM 24 at locations specified by the ROS/RAM address from the first two locations. In this example, it is assumed that the execute code is "83". This number has been selected since it will not interfere with any of the normal functions of the Series/1 processor. However, other values can be used if desired.

Built into the 4966 I/O attachment the I/O controller examines periodically, with a service loop routine on a cycle steal basis, the content of the main storage location 0002 and 0003. If the I/O controller sees the code "83" at any time during passage through the service loop, it executes the particular test operations specified by the data field.

Examples of data formats for memory locations 0000 through 0019 for five different test modes will now be discussed with reference to Figs. 8A through 8E.

Fig. 8A shows the content of main storage location 0000 through 0019 for the Display ROS or RAM content mode (hereinafter simply the "Display" mode). In this case, main storage locations 0000 and 0001 (abbreviated in the drawings as "0" and "1" for convenience) store the start address in the ROS 23 or the RAM 24 of the data which is to be transferred to the host processor and displayed upon the indicator lamps 16. The execute code "83" is placed in location 0002. The first of the two nibbles of location 0003 is set to hexadecimal "D" to indicate the Display mode. The second nibble of location 0003 contains the byte count, that is, the number of bytes, beginning from the start address specified in locations 0000 and 0001, which are to be read out from the ROS 23 or RAM 24. The byte count may be any value from hexadecimal "0" (specifying 16 bytes) to hexadecimal "F" (15 bytes). Main storage location 0004 through 0019, or as many of them as are necessary if a byte count of less than 16 is chosen, will contain the data read from the specified addresses after execution of the procedures.

In the case of the Alter RAM Contents mode (hereinafter simply the "Alter" mode), as shown in Fig. 8B, main storage locations 0000 and 0001 are set to the start address in the RAM at which alteration of data is to take place. However, it should be noted that the inputting of the execute code "83" should not be performed until the data for all of the other ones of locations 0000 through 0019 have been entered. The reason for doing this is that as soon as the I/O controller sees the "83" it will commence with a test routine. The first nibble of location 0003 is set to hexadecimal "A" to indicate the Alter mode. The second nibble of main storage location 0003 contains the byte count, the number of bytes of the RAM 24 to be altered. As in the case of Fig. 8A, the number of bytes may range from hexadecimal "0" to hexadecimal "F", where hexadecimal "0" indicates 16 bytes. Locations 0004 through 0019, or as many of them as are necessary, are filled with the altered data to be read into the specified locations in the RAM 24.

Fig. 8C illustrates the main storage content for the case of the Execute Sequence Table mode (hereinafter simply the "Table" mode). This mode is used for performing autoloader commands, and for setting, in the case that the I/O device 30 is a disc memory unit, the memory "pointer" to a designated cylinder, head and sector. In this case, main storage locations 0000 and 0001 are unused. The first nibble of location 0003 is set to "3" to indicate the Execute Sequence Table mode. The second nibble of location 0003 contains, similar to the above-described two cases, the byte count. Locations 0004 through 0019 contain table data specifying where the memory "pointer" is to be set.

Figs. 8D and 8E respectively indicate the main storage content for modes for saving the data from locations 0000 to 0019 and for returning it to main storage. In the former case, the "Save" mode, the first nibble of location 003 is set to "5" and in the latter case, the "Restore" mode, to "6".

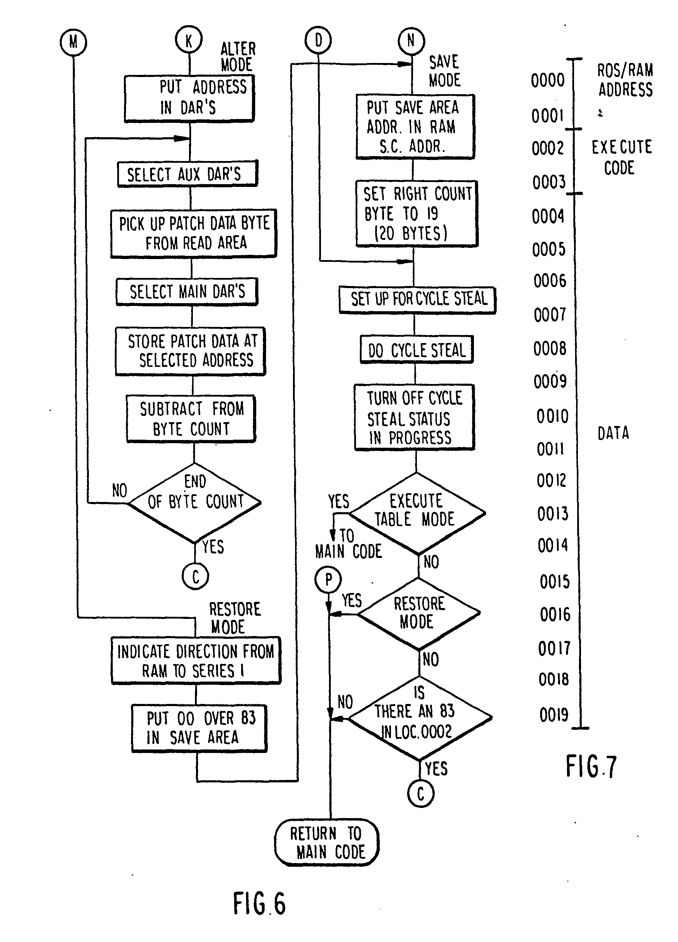

The execution of the test operations in each of the above mentioned modes will now be described in further detail with reference to the flow charts of Figs. 3—6. Referring first to Fig. 3, the I/O controller first determines whether the execution of a command is in progress. If YES, the program branches to point P (Fig. 6) and returns to the main program. If NO, for the specific example of the 4966 attachment, a switch S2R10 is turned off to turn off the Table mode. Next, the cycle steal is set in the direction out of the Series/1 host processor, after which the cycle steal count is set to XXX4 (where X indicates "do not care"). A set-up operation for a cycle steal operation is then performed.

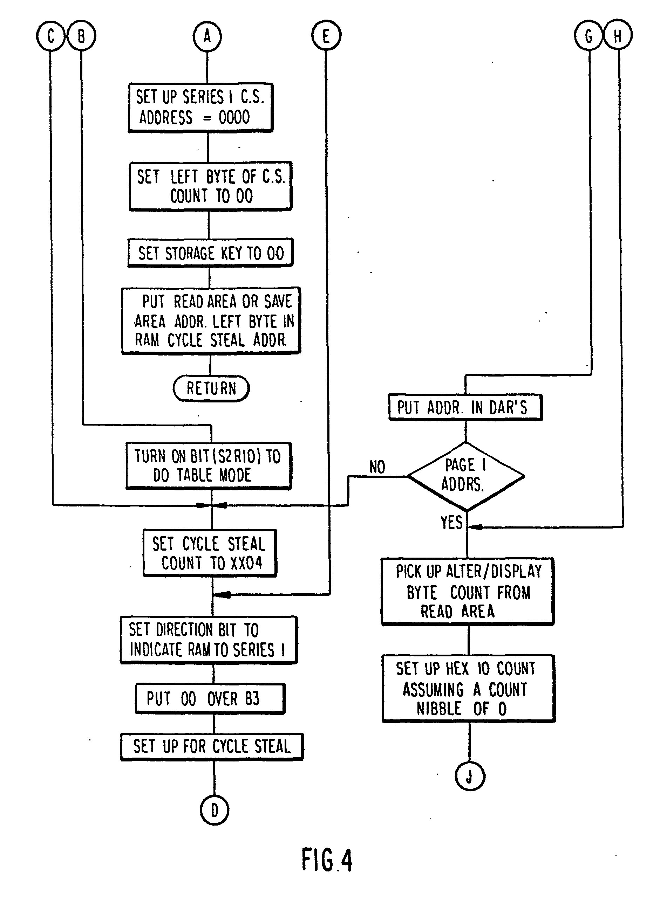

Referring to the small chart at the lower righthand side of Fig. 3, this operation will be described in more detail. First, the correct byte of the read area address is put into the RAM cycle steal address. The appropriate bit is then turned on to indicate that a start cycle steal command is in progress so that the residual address and residual count will not be disturbed by the cycle steal operation. Following the chart to point A in Fig. 4, the Series/1 cycle steal address is set to 0000 and the first byte of the cycle steal count is set to 00. The storage key is set to 00. The first byte of the read area or save area address is then placed in the RAM cycle steal address. The procedure then returns to Fig. 3, and the cycle steal operation is performed. At the completion of the cycle steal operation, the cycle steal status bit is reset.

The I/O processor 20 is then ready to examine what is stored in location 0002 in the main storage and to determine whether the value "83" is then present. If "83" is not present, then the procedure loops back to point P and continues in the manner already discussed. If "83" is present, the I/O processor 20 is taken out of the diagnostic mode and location 0003 of the main storage is examined to determine the mode to be employed. If the first byte of location 0003 contains "5", the contents of locations 0000 through 0019 from the main storage are transferred to RAM 24 where they are saved. (It is to be noted that since locations 0000 through 0003 are needed for implementing this operation, it will be necessary for the user to manually determine the contents of these two locations, write them down, and at the end of the test procedure, input the data thus manually saved.) If the Save mode has been selected, the procedure branches to N in Fig. 6. In the Save mode, the save area address is taken as the RAM cycle steal address and the byte count is set to 19 (20 bytes). After going through the cycle steal procedure in the manner indicated in Fig. 3, a determination is made as to whether the Execute Table mode is to be carried out. If YES, a return is made to the main code, while if the result is NO, a decision is then made as to whether or not a Restore mode operation is to be executed. If the answer to this decision is YES, a return is again made to main code, while if NO, location 0002 in the main storage is again examined on a cycle steal basis to determine whether "83" is stored therein. If NO, a return is again made to main code. If YES, operations proceed to point C and continue in a manner to be explained below.

Referring back to Fig. 3, if the first byte of location 0003 not "5", a determination is made of whether or not the first byte of location 0003 is "6". If YES, the operation proceeds to point M in Fig. 6. In the Restore mode, the cycle steal direction is set in the direction of the Series/1 from the RAM 24. "00" is then placed over the "83" in location 002. Then, the operation loops back to point N discussed above.

If the first byte of location 0003 is not "5" or "6", a determination is made of whether or not the Alter mode has been chosen by determining whether or not the first byte of location 0003 is "A". If YES, the operation branches to point G (Fig. 4). In this case, the address from locations 0000 and 0001 is put into the data address register of the microprocessor 22. A determination is then made as to whether or not the address received is a "Page 1" address of the I/O controller. If No, the operation branches to point C. If YES, the alter byte count (the "count nibble") from the second byte of main storage location 0003 is picked up and examined. If the value of the alter count is 0 (corresponding to an actual count of 16), the count is set to hexadecimal 10.

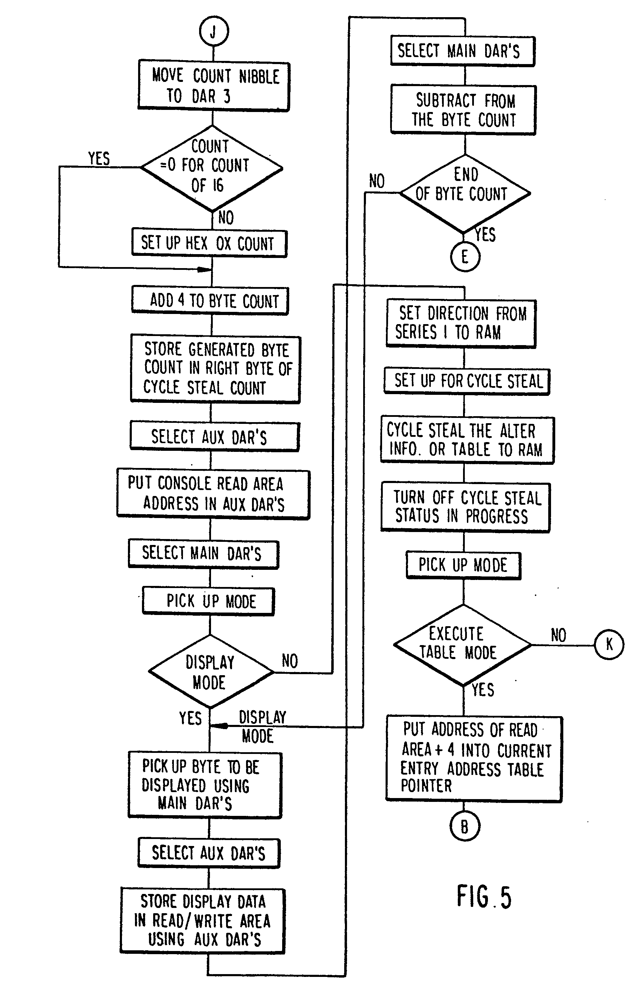

Branching to point J (Fig. 5), the alter count is moved to DAR (Data Address Register) number 3. After the count has been appropriately set to take into account the fact that 0 represents an actual count of 16, a value of four is added to the byte count. The result is stored in the second (right) byte of the cycle steal count. The auxiliary data address registers are then selected and the console read area address is set therein. The main DARs are then selected. Since the Display mode is not then selected, the cycle steal direction is set to be from the Series/1 to RAM 24. The cycle steal procedure is then carried out in the manner described above, specifically, the cycle steal operation is used to move the data specified in locations 0004 through 0019 from the main storage into RAM 24.

When this has been completed, the cycle steal status bit is set to the off state. Since the Table mode is not selected in the Alter mode, branching to point K (Fig. 6), alter/display address is set in the DARs, and the auxiliary DARs are selected. Patch data is picked up from the read area of main storage. The main DARs are selected, and the patch data is stored therein at the selected address. Next, one is subtracted from the byte count. If the end of the byte count has not been reached, the process loops back as indicated. If it has been reached, the operation moves again to point C (Fig. 4).

Returning to Fig. 3, if the Alter mode is not selected but the Display mode is selected, the operation again branches to point G (Fig. 4). In this case, the operation proceeds in a manner similar to that in the Alter mode. However, when the Display mode decision box shown in Fig. 5 is reached, the result of the decision will be YES. In this case, a byte to be displayed is picked up and stored in the main DARs. The auxiliary DARs are selected and the display data stored in the read/write areas thereof. The main DARs are then selected, and one is subtracted from the byte count. If the end of the byte count has been reached, the operation loops back to point E (Fig. 4). If not, the operation loops back to the YES side of the Display mode decision box. Referring back to Fig. 3, if none of the Save, Restore, Alter or Display modes have been selected but the Table mode has been selected, the operation goes to point H (Fig. 4). The byte count is picked up from location 0003, and, as described above, hexadecimal 10 is used for the count if location 0003 contains 0 (representing an actual count of 16). The operation then goes to point J (Fig. 5). When the Table mode decision box is reached, the operation will proceed to the next box and the address of the read area plus a value of four is set into the current entry address table pointer of the microprocessor. Returning to point B (Fig. 4) bit S2R10 is then turned on to indicate the execution of the Table mode. The remainder of the procedure then continues in the manner previously described.

Though the flow charts of Figs. 3 through 6 and the programs that they describe are, as mentioned above, for use with an IBM Corporation Series/1 data processor and an 4966 attachment, one of ordinary skill in the art can easily adapt the described programs to another appropriate data processing system.

## Claims

1. A method for testing the operation of an I/O controller (20) of a data processing system including a host processor (10), wherein a testing program is loaded into a random access memory (24) of said I/O controller (20) through said host processor (10) on a cycle steal basis, said processor (10) being characterized by the steps of:

clearing and reserving the use of storage locations in a main storage (11) associated with said host processor (10),

inputting through a console (13) of said host processor (10) into said storage locations of said main storage (11) information comprising data and/or instructions for use by said testing program, and

transferring said information from said storage locations of the main storage (11) unit of said host processor (10) to said random access memory (24) of said I/O controller (20) on a cycle steal basis as controlled by said testing program.

2. The method according to claim 1, further comprising the step of transferring data from said random access memory (24) of said I/O controller (20) to said storage locations of the main storage unit (11) of said host processor (10) on a cycle steal basis under the control of said testing program.

3. The method according to claim 2, further comprising the step of displaying on indicator lamps of said console (13) of said host processor (10) said data transferred to said storage locations of said main storage unit (11).

4. The method according to claim 2 or 3, wherein said data transferred from said random access memory (24) to said storage locations of said main storage unit (11) is received from a memory unit (30) coupled by said I/O controller (20) to said host processor (10).

5. The method according to any one of claims 1 to 4, wherein said step of inputting information into said storage locations of said main storage unit (11) of said host processor (10) comprises inputting through said console (13) an address of said random access memory (24) and data for storage in said random acess memory (24).

6. The method according to any one of the preceding claims, further comprising the step of transferring data from a read only storage (23) of said I/O controller (20) to said storage locations of said main storage unit (11) of said host processor (10) on a cycle steal basis under the control of said testing program.

7. The method according to any one of the preceding claims, wherein said step of inputting said information through said console (13) of said host processor (10) comprises inputting, after all other information has been inputted, an execute code.

8. The method according to claim 7, further comprising the step of periodically determining whether or not said execute code is present, and if and only if said execute code is present, continuing with said step of cycle stealing said information.

9. The method according to any one of the preceding claims further comprising the step of, after testing of the operation of said I/O controller (20) has been completed, returning to main storage unit (11) of said host processor (10) and of clearing data from said storage locations of said main storage unit (11).

10. The method according to claim 9, wherein said step of clearing said storage locations of said main storage unit (11) comprises transferring data stored in said storage locations to said random access memory (24) of said I/O controller (20), and wherein said step of returning said data comprises transferring said data to said main storage (11).

**Patentansprüche**

1. Verfahren zum Testen der Funktion einer Ein-Ausgabesteuerung (20) eines Datenverarbeitungssystems, enthaltend einen Verarbeitungsrechner (10), worin ein Testprogramm in einen Direktzugriffspeicher (24) der genannten Ein-Ausgabesteuerung (20) durch den genannten Verarbeitungsrechner (10) auf einer Cycle-Steal-Basis geladen wird, wobei das genannte Verfahren durch die folgenden Schritte gekennzeichnet ist:

Löschung und Reservierung der Anwendung von Speicherelementen in einem Hauptspeicher (11), der dem genannten Verarbeitungsrechner (10) zugeordnet ist;

Eingabe durch ein Bedienpult (13) des genannten Verarbeitungsrechners (10) in die genannten Speicherelemente des genannten Hauptspeichers (11) einer Information, welche Daten und/oder Befehle zur Anwendung des genannten Testprogramms enthält, und

Übertragung der genannten Information von den genannten Speicherelementen der Hauptspeichereinheit (11) des genannten Verarbeitungsrechners (10) zu dem genannten Direktzugriffspeicher (24) der genannten Ein-Ausgabesteuerung (20) auf einer Cycle-Steal-Basis unter der Kontrolle des genannten Testprogramms.

2. Verfahren nach Anspruch 1, enthaltend ferner den Schritt der Datenübertragung von dem genannten Direktzugriffspeicher (24) der genannten Ein-Ausgabesteuerung (20) zu den genannten Speicherelementen der Hauptspeichereinheit (11) des genannten Verarbeitungsrechners (10) auf einer Cycle-Steal-Basis unter der Kontrolle des genannten Testprogramms.

3. Verfahren nach Anspruch 2, enthaltend ferner den Schritt der Anzeige auf Anzeigelampen des genannten Bedienpults (13) des genannten Verarbeitungsrechners (10) der genannten Daten, welche zu den genannten Speicherelementen der genannten Hauptspeichereinheit (11) übertragen werden.

4. Verfahren nach Anspruch 2 oder 3, worin die genannten Daten, welche von dem genannten Direktzugriffspeicher (24) zu den genannten Speicherelementen der genannten Hauptspeichereinheit (11) übertragen werden, von einer Speichereinheit (30) empfangen werden, welche durch die genannte Ein-Ausgabesteuerung (20) an den genannten Verarbeitungsrechner (10) gekoppelt ist.

5. Verfahren nach einem der Ansprüche 1 bis 4, worin der genannte Schritt der Informationseingabe in die genannten Speicherelemente der genannten Hauptspeichereinheit (11) des genannten Verarbeitungsrechners (10) die Eingabe durch das genannte Bedienpult (13) einer Adresse von dem genannten Direktzugriffspeicher (24) und Daten zur Speicherung in dem genannten Direktzugriffspeicher (24) enthält.

6. Verfahren nach einem der vorangehenden Ansprüche, enthaltend ferner den Schritt der Datenübertragung von einem Festwertspeicher (23) der genannten Ein-Ausgabesteuerung (20) an die genannten Speicherelemente der genannten Hauptspeichereinheit (11) des genannten Verarbeitungsrechners (10) auf einer Cycle-Steal-Basis unter der Kontrolle des Testprogramms.

7. Verfahren nach einem der vorangehenden Ansprüche, worin der Schritt der Eingabe der genannten Information durch das genannte Bedienpult (13) des genannten Verarbeitungsrechners (10) die Eingabe, nachdem alle anderen Informationen eingegeben worden sind, eines Ausführungskodes enthält.

8. Verfahren nach Anspruch 7, enthaltend ferner den Schritt periodischer Bestimmung, ob der genannte Ausführungskode vorhanden ist oder nicht und wenn, und nur wenn der genannte Ausführungskode vorhanden ist, die Fortsetzung mit dem genannten Cycle-Steal-Schritt der genannten Information.

9. Verfahren nach einem der vorangehenden Ansprüche, enthaltend ferner, nachdem der Funktionstest der genannten Ein-Ausgabesteuerung (20) ausgeführt worden ist, den Schritt der Rückführung zur Hauptspeichereinheit (11) des genannten Verarbeitungsrechners (10) und der Löschung von Daten aus den genannten Datenelementen der genannten Hauptspeichereinheit (11).

10. Verfahren nach Anspruch 9, worin der Schritt der Löschung der genannten Speicherelemente der genannten Hauptspeichereinheit (11) die Datenübertragung in den genannten Speicherelementen zu dem genannten Direktzugriffspeicher (24) der genannten Ein-Ausgabesteuerung (20) enthält, und worin der genannte Schritt der Rückführung der genannten Daten die Übertragung der genannten Daten an die genannte Hauptspeichereinheit (11) enthält.

**Revendications**

1. Procédé pour tester le fonctionnement d'un contrôleur d'entrée/sortie (E/S) (20) dans un système de traitement de données comprenant un processeur hôte (10), procédé dans lequel aun programme de test est chargé dans une mémoire à accès sélectif (24) dudit contrôleur d'E/S (20) par l'intermédiaire dudit processeur hôte (10) sur la base d'un vol de cycle, ledit procédé étant caractérisé par les étapes suivantes consistant à:

effacer le contenu et réserver l'emploi de positions de mémoire dans une mémoire principale (11) associée audit processeur hôte (10),

charger, par l'intermédiaire d'une console (13) dudit processeur hôte (10), dans lesdites positions de mémoire de ladite mémoire principale (11) des informations comprenant des données et/ou des instructions destinées à être utilisées par ledit programme de test, et

transférer lesdites informations desdites positions de mémoire de la mémoire principale (11) dudit processeur hôte (10) à ladite mémoire à accès sélectif (24) dudit contrôleur d'E/S au moyen de vols de cycles sous le contrôle dudit programme de test.

2. Procédé selon la revendication 1, comprenant en outre une étape consistant à transférer des données de ladite mémoire à accès sélectif (24) dudit contrôleur d'E/S (20) auxdites positions de mémoire de la mémoire principale (11) dudit processeur hôte (10) au moyen de vols de cycles sous le contrôle dudit programme de test.

3. Procédé selon la revendication 2, comprenant en outre une étape consistant à afficher sur des voyants lumineux de ladite console (13) dudit processeur hôte (10) lesdites données transférées auxdites positions de mémoire de ladite mémoire principale (11).

4. Procédé selon la revendication 2 ou 3, dans lequel lesdites données transférées de ladite mémoire à accès sélectif (24) auxdites positions de mémoire de ladite mémoire principale (11) sont reçues d'une unité de mémoire (30) connectée par ledit contrôleur d'E/S (20) audit processeur hôte (10).

5. Procédé selon l'une quelconque des revendications 1 à 4, dans lequel ladite étape consistant à charger des informations dans lesdites positions de mémoire de ladite mémoire principale (11) dudit processeur hôte (10) inclut le chargement, par l'intermédiaire de ladite console (13), d'une adresse de ladite mémoire à accès sélectif (24) et de données destinées à être stockées dans ladite mémoire à accès sélectif (24).

6. Procédé selon l'une quelconque des revendications précédentes, comprenant en outre une étape consistant à transférer des données d'une mémoire morte (23) dudit contrôleur d'E/S (20) auxdites positions de mémoire de ladite mémoire principale (11) dudit processeur hôte (10) au moyen de vols de cycles sous le contrôle dudit programme de test.

7. Procédé selon l'une quelconque des revendications précédentes, dans lequel ladite étape consistant à charger lesdites informations par l'intermédiaire de ladite console (13) dudit processeur hôte (10) inclut le chargement, consécutivement à celui de toutes les autres informations, d'un code d'exécution.

8. Procédé selon la revendication 7, comprenant en outre une étape consistant à déterminer périodiquement si ledit code d'exécution est ou non présent, et si, et seulement si, ledit code est présent, à poursuivre l'exécution de ladite étape de transfert desdites informations au moyen de vols de cycles.

9. Procédé selon l'une quelconque des revendications précédentes, comprenant en outre une étape consistant, après avoir testé le fonctionnement dudit contrôleur d'E/S (20), à renvoyer à la mémoire principale (11) dudit processeur hôte (10) les données précédemment effacées dans lesdites positions de mémoire.

10. Procédé selon la revendication 9, dans lequel ladite étape consistant à effacer le contenu desdites positions de mémoire de ladite mémoire principale (11) inclut le transfert des données stockées dans lesdites positions de mémoire à ladite mémoire à accès sélectif (24) dudit contrôleur d'E/S (20), et dans lequel ladite étape consistant à renvoyer lesdites données inclut le transfert desdites données à ladite mémoire principale.

## FIG.1

HOST PROCESSOR, 10

I/O CONTROLLER, 20

MAIN STORAGE

I/O CHANNEL

INTERFACE CIRCUITS

I/O DEVICE

CPU

MICROPROCESSOR

CONSOLE

ROS 23

RAM 24

## FIG.2

Load | Wait | Run

Load

IPL Source — Primary / Alternate

Mode — Auto IPL / Normal / Diagnostic

Power -On

On / Off

INDICATOR LAMPS, 16

0  1  2  3  4  5  6  7  8  9  10  11  12  13  14  15

Check | Reset +++ | | Store | Data Buffer | Console Interrupt +++ | Start | Stop

Level 0 | Level 1 | Level 2 | Level 3 | Stop On Address | Instruct Step | Check Restart | Stop On Error

KEYBOARD, 17

PSW | OpReg | CIAR | SAR | 0 | 1 | 2 | 3

LSR | AKR | IAR | Main Storage | 4 | 5 | 6 | 7

R0 | R1 | R2 | R3 | 8 | 9 | A | B

R4 | R5 | R6 | R7 | C | D | E | F

FIG.3

FIG.4

FIG.5

FIG.6

FIG.7

EP 0 115 566 B1

EP 0 115 566 B1

FIG.8A DISPLAY ROS OR RAM CONTENTS

| LOC. | 0 | | 1 | | 2 | | 3 | | 4 | | 5 | | | 1 8 | | 1 9 | |
|------|---|---|---|---|---|---|---|---|---|---|---|---|---|-----|---|-----|---|
| DATA | 1 | a | a | a | 8 | 3 | D | c | d | d | d | d | | d | d | d | d |

DISPLAY START ADDR.
EXECUTE CODE
DISLAY MODE
BYTE COUNT 0-F WHERE 0 = 16 BYTES
DATA READ FROM SPECIFIED ADDRESS

FIG.8B ALTER RAM CONTENTS

| LOC. | 0 | | 1 | | 2 | | 3 | | 4 | | 5 | | | 1 8 | | 1 9 | |
|------|---|---|---|---|---|---|---|---|---|---|---|---|---|-----|---|-----|---|
| DATA | 1 | a | a | a | 8 | 3 | A | c | d | d | d | d | | d | d | d | d |

ALTER START ADDR.
EXECUTE CODE
ALTER MODE
BYTE COUNT 0-F WHERE 0 = 16 BYTES
ALTER DATA

FIG.8C EXECUTE SEQUENCE TABLE

| LOC. | 0 | | 1 | | 2 | | 3 | | 4 | | 5 | | | 1 8 | | 1 9 | |
|------|---|---|---|---|---|---|---|---|---|---|---|---|---|-----|---|-----|---|
| DATA | X | X | X | X | 8 | 3 | 3 | c | T | T | T | T | | T | T | T | T |

UNUSED
EXECUTE CODE
EXECUTE SEQ. TBL MODE
BYTE COUNT 0-F WHERE 0 = 16 BYTES
TABLE DATA

FIG.8D SAVE SERIES/1 STORAGE LOCATION 0000 TO 0019

| LOC. | 0 | | 1 | | 2 | | 3 | |
|------|---|---|---|---|---|---|---|---|
| DATA | X | X | X | X | 8 | 3 | 5 | X |

NOT USED
EXECUTE CODE
SAVE MODE
NOT USED

FIG.8E RESTORE SERIES/1 STORAGE LOCATION 0000 TO 0019

| LOC. | 0 | | 1 | | 2 | | 3 | |
|------|---|---|---|---|---|---|---|---|
| DATA | X | X | X | X | 8 | 3 | 6 | X |

NOT USED
EXECUTE CODE
RESTORE MODE
NOT USED

6